# EUROPÄISCHE PATENTSCHRIFT

(11) **EP 3 109 603 B1**
(45) Veröffentlichungstag und Bekanntmachung des Hinweises auf die Patenterteilung: **02.01.2019**
(21) Anmeldenummer: 16162626.2
(22) Anmeldetag: 29.03.2016
(51) Int. Cl.: G01F 1/72, G01F 15/07, G01F 25/00, B67C 3/20, G01F 1/00, G01F 11/00, G01F 15/00, G01F 15/075, G01F 22/00, B67C 3/28, G01F 13/00, G01F 1/58

(54) **VERFAHREN ZUM BETREIBEN EINES DURCHFLUSSMESSGERÄTS UND DURCHFLUSSMESSGERÄT**
METHOD FOR OPERATING A FLOW METER AND FLOW METER
PROCÉDÉ DE FONCTIONNEMENT D'UN DÉBITMÈTRE ET DÉBITMÈTRE

(30) Priorität: 11.05.2015 DE 102015107366
(43) Veröffentlichungstag der Anmeldung: 28.12.2016
(73) Patentinhaber: Krohne Messtechnik GmbH, 47058 Duisburg (DE)
(72) Erfinder: Brockhaus, Helmut, 46145 Oberhausen (DE); Dabrowski, Markus, 47269 Duisburg (DE); Florin, Wilhelm, 47198 Duisburg (DE)
(74) Vertreter: Gesthuysen Patent- und Rechtsanwälte

(56) Entgegenhaltungen:
- EP-A2- 2 793 975
- US-A1- 2009 171 502

## Beschreibung

Die Erfindung betrifft ein Verfahren zum Betreiben eines Durchflussmessgeräts mit einem Messrohr, wobei der Durchfluss eines Mediums durch das Messrohr gemessen wird. Weiterhin betrifft die Erfindung auch ein Durchflussmessgerät mit einem Messrohr und einer Steuerung, wobei die Steuerung im Betrieb den Durchfluss eines Mediums durch das Messrohr misst.
Ein Durchflussmessgerät mit einem Messrohr implementiert ein Messprinzip zur Messung des Durchflusses eines Mediums durch das Messrohr und misst im Betrieb den Durchfluss gemäß dem Messprinzip. Als Durchfluss werden dabei der Volumenstrom und der Massestrom des Mediums durch das Messrohr bezeichnet.

Die Messgenauigkeit eines Durchflussmessgeräts wird insbesondere auch durch den Nulldurchfluss durch das Messrohr bestimmt. Der Nulldurchfluss ist der Durchfluss, der von dem Durchflussmessgerät gemessen wird, wenn ein Medium durch das Messrohr nicht strömt. Ist der Nulldurchfluss ungleich Null, dann ist der durch das Durchflussmessgerät gemessene Durchfluss des strömenden Mediums mit einem konstanten Fehler in Höhe des Nulldurchflusses behaftet. Demnach verursacht ein Nulldurchfluss ungleich Null einen konstanten Messfehler.
Aus der US 2012/0211518 A1 ist ein Verfahren zum Betreiben eines Durchflussmessgeräts bekannt, wobei ein in einem Durchflussintervall gemessener Durchfluss mittels eines in einem Nulldurchflussintervall bestimmten Nulldurchflusses korrigiert wird. Aus der US 2009/0171502 ist ein Abgabe-Verifizierungsmessgerät zum Messen und Verifizieren von Abgabevorgängen von Medien-Dosiersystemen bekannt. Die EP 2 793 975 beschäftigt sich mit Peristaltikpumpen zur Infusion von Fluiden.
Der Erfindung liegt daher die Aufgabe zugrunde, ein Verfahren zum Betreiben eines Durchflussmessgeräts sowie ein Durchflussmessgerät anzugeben, bei dem ein Messfehler durch einen Nulldurchfluss ungleich Null zumindest reduziert ist.

Die Erfindung bezieht sich gemäß einer ersten Lehre auf ein Verfahren zum Betreiben eines Durchflussmessgeräts, bei dem die hergeleitete und aufgezeigte Aufgabe gelöst ist. Das erfindungsgemäße Verfahren ist zunächst und im Wesentlichen durch die folgenden Verfahrensschritte gekennzeichnet: In einem ersten Verfahrensschritt wird jeweils eine kontinuierliche Verweildauer des gemessenen Durchflusses größer oder gleich einem Durchflussschwellenwert einem Durchflussintervall zugeordnet und aus dem gemessenen Durchfluss in dem Durchflussintervall eine Durchflussmenge bestimmt. In einem zweiten Verfahrensschritt wird jeweils eine kontinuierliche Verweildauer des gemessenen Durchflusses kleiner dem Durchflussschwellenwert einem Nulldurchflussintervall zugeordnet. In einem dritten Verfahrensschritt wird jeweils die Abweichmenge der Durchflussmenge in einem Durchflussintervall von einer Referenzdurchflussmenge bestimmt und die Abweichmenge mit einer Grenzabweichmenge verglichen. In einem vierten Verfahrensschritt wird, wenn die Abweichmenge in einem Durchflussintervall kleiner als die Grenzabweichmenge ist, der Nulldurchfluss durch das Messrohr mit dem gemessenen Durchfluss in dem dem Durchflussintervall unmittelbar vorangehenden Nulldurchflussintervall bestimmt und kompensiert. Die Kompensation des Nulldurchflusses erfolgt zum Beispiel durch Subtraktion des Nulldurchflusses vom gemessenen Durchfluss, wodurch der durch den Nulldurchfluss verursachte konstante Messfehler zumindest reduziert ist.

Aus dem ersten und zweiten Verfahrensschritt ist ersichtlich, dass das erfindungsgemäße Verfahren ein Durchflussprofil des Mediums durch das Messrohr erfordert, bei dem der gemessene Durchfluss des Mediums in Durchflussintervallen größer oder gleich dem Durchflussschwellenwert und in Nulldurchflussintervallen kleiner dem Durchflussschwellenwert ist. In einem ersten Beispiel wird das Durchflussprofil des Mediums im Messrohr durch eine Kalibriervorrichtung erzeugt. In einem zweiten Beispiel ist das Durchflussprofil durch den Prozess gegeben, in den das Durchflussmessgerät, integriert ist. Der Prozess ist zum Beispiel ein Abfüllprozess eines Mediums in Behältnisse. Ein Abfüllprozess besteht im Wesentlichen aus einem ersten und einem zweiten Abfüllschritt, die fortwährend wiederholt werden. Im ersten Abfüllschritt wird ein Behältnis mit dem Mediums befüllt, indem das Medium gefördert wird, wodurch es auch durch das Messrohr strömt. Im zweiten Abfüllschritt wird das befüllte Behältnis gegen ein weiteres Behältnis ausgetauscht, wobei das Medium nicht gefördert wird und somit auch nicht durch das Messrohr strömt. Folglich wird der Durchflussschwellenwert derart gewählt, dass der erste Verfahrensschritt des erfindungsgemäßen Verfahrens während des ersten Abfüllschritts des Abfüllprozesses und der zweite Verfahrensschritt während des zweiten Abfüllschritts ausgeführt wird. Mithin ist das erfindungsgemäße Verfahren insbesondere für Abfüllprozesse geeignet.

Dem vierten Verfahrensschritt liegt die erfindungsgemäße Erkenntnis zugrunde, dass die Abweichmenge der Durchflussmenge in einem Durchflussintervall von der Referenzdurchflussmenge mit einer Durchflussmenge im dem dem Durchflussintervall unmittelbar vorhergehenden Nulldurchflussintervall korrespondiert. Da eine Durchflussmenge in einem Nulldurchflussintervall die Bestimmung des Nulldurchflusses beeinträchtigt, wird der Nulldurchfluss mit dem in einem Nulldurchflussintervall gemessenen Durchfluss nur dann bestimmt, wenn die Abweichmenge in dem dem Nulldurchflussintervall unmittelbar nachfolgenden Durchflussintervall kleiner als die Grenzabweichmenge ist. Demnach korrespondiert die Grenzabweichmenge mit der Abweichung des Nulldurchflusses von Null, weshalb die Grenzabweichmenge durch den in einem Prozess durch den Nulldurchfluss verursachten tolerierbaren konstanten Messfehler bestimmt wird.

Bei dem erfindungsgemäßen Verfahren ist die Bedingung für die Bestimmung des Nulldurchflusses, dass die Abweichmenge kleiner als die Grenzabweichmenge ist, weshalb das Verfahren keine Referenzdurchflussmenge einer bestimmten Größe erfordert. Deshalb ist in einer ersten Ausgestaltung des erfindungsgemäßen Verfahrens vorgesehen, dass die Referenzdurchflussmenge aus mindestens einer der Durchflussmengen bestimmt wird. Die Ausgestaltung ist insbesondere bei Abfüllprozessen vorteilhaft, da die Abfüllschritte und damit auch Durchflussintervalle und Nulldurchflussintervalle, fortwährend wiederholt werden und somit eine Mehrzahl von Durchflussmengen bestimmt wird.

In einer Weiterbildung der vorangehenden Ausgestaltung ist vorgesehen, dass die Referenzdurchflussmenge bestimmt wird, indem eine der Durchflussmengen der Referenzdurchflussmenge zugeordnet wird. Die Zuordnung einer der Durchflussmengen zur Referenzdurchflussmenge stellt die einfachste Form der Bestimmung der Referenzdurchflussmenge dar.

Jede Messung einer physikalischen Größe, wie sie auch zur Messung des Durchflusses des Mediums erfolgt, ist von Störungen überlagert. Die Störungen umfassen jedenfalls statistisch verteilte Störungen wie Rauschen und können auch sporadische Störungen umfassen. Die Störungen sind auch noch in den aus dem Durchfluss bestimmten Durchflussmengen enthalten, weshalb sie dann bei der Zuordnung einer der Durchflussmengen zur Referenzdurchflussmenge in der Referenzdurchflussmenge enthalten sind. Deshalb ist zur Reduktion von Störungen in der Referenzdurchflussmenge bei einer alternativen Weiterbildung der vorangegangenen Ausgestaltung vorgesehen, dass die Referenzdurchflussmenge bestimmt wird, indem der Mittelwert aus mindestens zwei der Durchflussmengen bestimmt und der Referenzdurchflussmenge zugeordnet wird.

Jedes Durchflussintervall beginnt, wenn der gemessene Durchfluss den Durchflussschwellenwert überschreitet und endet, wenn der gemessene Durchfluss den Durchflussschwellenwert unterschreitet. Entsprechend beginnt jedes Nulldurchflussintervall, wenn der gemessene Durchfluss den Durchflussschwellenwert unterschreitet und endet, wenn der gemessene Durchfluss den Durchflussschwellenwert überschreitet. Damit die aus dem gemessenen Durchfluss bestimmte Durchflussmenge der tatsächlichen Durchflussmenge entspricht, ist dem Durchflussschwellenwert ein Durchfluss von Null zuzuordnen. Da der gemessene Durchfluss aber von Störungen überlagert ist, ist dem Durchflussschwellenwert ein Durchfluss größer als die Störungen zuzuordnen, wobei der dem Durchflussschwellenwert zugeordnete Durchfluss für gewöhnlich nahe Null ist.

Der Durchfluss durch das Messrohr weist sowohl beim Überschreiten als auch beim Unterschreiten des Durchflussschwellenwerts für gewöhnlich einen großen Gradienten auf, der einen Einschwingvorgang des Durchflusses zur Folge hat. Deshalb ist zur Erhöhung der Genauigkeit und/oder Konstanz der Bestimmung der Durchflussmenge in einer weiteren Ausgestaltung des Verfahrens vorgesehen, dass die Durchflussmenge jeweils in einem Teilintervall eines Durchflussintervalls bestimmt wird. Die Dauer des Teilintervalls in einem Durchflussintervall ist dabei derart bemessen, dass Einschwingvorgänge des Durchflusses innerhalb des Teilintervalls bereits abgeklungen sind. Die geringere Dauer eines Teilintervalls im Vergleich mit einem Durchflussintervall bewirkt, dass ein bestimmter Durchfluss kleiner ist als der tatsächliche Durchfluss, was jedoch keine Auswirkung auf das erfindungsgemäße Verfahren hat.

Entsprechende Überlegungen haben dazu geführt, dass zur Erhöhung der Genauigkeit und/oder Konstanz der Bestimmung des Nulldurchflusses in einer weiteren Ausgestaltung vorgesehen ist, dass der gemessene Durchfluss jeweils in einem Teilintervall eines Nulldurchflussintervalls verwendet wird. Auch bei dieser Ausgestaltung ist die Dauer des Teilintervalls in einem Nulldurchflussintervall derart bemessen, dass Einschwingvörgänge des Durchflusses innerhalb des Teilintervalls bereits abgeklungen sind.

Der Aufwand des erfindungsgemäßen Verfahrens ist in einer weiteren Ausgestaltung dadurch reduziert, dass jeweils eine kontinuierliche Verweildauer des gemessenen Durchflusses kleiner dem Durchflussschwellenwert einem Nulldurchflussintervall zugeordnet wird, wenn die Abweichmenge in einem Durchflussintervall kleiner als die Grenzabweichmenge ist, wobei das Nulldurchflussintervall dem Durchflussintervall unmittelbar vorangeht. Demnach wird nicht jeder kontinuierlichen Verweildauer des gemessenen Durchflusses kleiner dem Durchflussschwellenwert ein Nulldurchflussintervall zugeordnet, sondern einer kontinuierlichen Verweildauer des gemessenen Durchflusses kleiner dem Durchflussschwellenwert wird nur dann ein Nulldurchflussintervall zugeordnet, wenn die Abweichmenge in dem folgenden Durchflussintervall kleiner als die Grenzabweichmenge ist.

Bei einer weiteren Ausgestaltung ist vorgesehen, dass der Nulldurchfluss mit dem gemessenen Durchfluss in einem einzigen Nulldurchflussintervall bestimmt wird. Die Genauigkeit der Bestimmung des Nulldurchflusses wird jedoch erhöht, wenn die Bestimmung sukzessive erfolgt. Deshalb ist in einer zur vorangehenden Ausgestaltung alternativen Ausgestaltung vorgesehen, dass der Nulldurchfluss mit dem gemessenen Durchfluss aus mindestens zwei Nulldurchflussintervallen bestimmt wird, indem aus dem gemessenen Durchfluss in den mindestens zwei Nulldurchflussintervallen ein gleitender Mittelwert gebildet wird oder indem auf den gemessenen Durchfluss in den mindestens zwei Nulldurchflussintervallen ein Medianfilter angewendet wird.

Die Erfindung bezieht sich gemäß einer zweiten Lehre auf ein Durchflussmessgerät, bei dem die hergeleitete und aufgezeigte Aufgabe gelöst ist. Das erfindungsgemäße Durchflussmessgerät ist zunächst und im Wesentlichen dadurch gekennzeichnet, dass die Steuerung im Betrieb einen Durchflussschwellenwert, eine Referenzdurchflussmenge und eine Grenzabweichmenge speichert. Des Weiteren ordnet die Steuerung im Betrieb jeweils einer kontinuierlichen Verweildauer des gemessenen Durchflusses größer oder gleich dem Durchflussschwellenwert ein Durchflussintervall zu und bestimmt aus dem gemessenen Durchfluss in dem Durchflussintervall eine Durchflussmenge. Sie ordnet weiter jeweils einer kontinuierlichen Verweildauer des gemessenen Durchflusses kleiner dem Durchflussschwellenwert ein Nulldurchflussintervall zu. Weiterhin bestimmt die Steuerung im Betrieb jeweils die Abweichmenge der Durchflussmenge in einem Durchflussintervall von der Referenzdurchflussmenge und vergleicht die Abweichmenge mit der Grenzabweichmenge. Die Steuerung bestimmt und kompensiert, wenn die Abweichmenge in einem Durchflussintervall kleiner als die Grenzabweichmenge ist, den Nulldurchfluss durch das Messrohr mit dem gemessenen Durchfluss in dem dem Durchflussintervall unmittelbar vorangehenden Nulldurchflussintervall.

Die Ausführungen zu dem erfindungsgemäßen Verfahren gelten entsprechend für das erfindungsgemäße Durchflussmessgerät.

Eine Ausgestaltung des erfindungsgemäßen Durchflussmessgeräts sieht vor, dass die Steuerung ein zuvor beschriebenes erfindungsgemäßes Verfahren ausführt.

In einer weiteren Ausgestaltung ist vorgesehen, dass das Durchflussmessgerät ein magnetisch-induktives Durchflussmessgerät oder ein kernmagnetisches Durchflussmessgerät ist.

Im Einzelnen ist eine Vielzahl von Möglichkeiten gegeben, das erfindungsgemäße Verfahren und das erfindungsgemäße Durchflussmessgerät auszugestalten und weiterzubilden. Dazu wird verwiesen sowohl auf die den Patentansprüchen 1 und 9 nachgeordneten Patentansprüche als auch auf die nachfolgende Beschreibung von bevorzugten Ausführungsbeispielen in Verbindung mit der Zeichnung. In der Zeichnung zeigt
- Fig. 1: ein Ausführungsbeispiel des erfindungsgemäßen Durchflussmessgeräts,
- Fig. 2: einen von dem Durchflussmessgerät gemessenen Durchfluss und
- Fig. 3: den Ablaufplan eines Ausführungsbeispiels des erfindungsgemäßen Verfahrens.

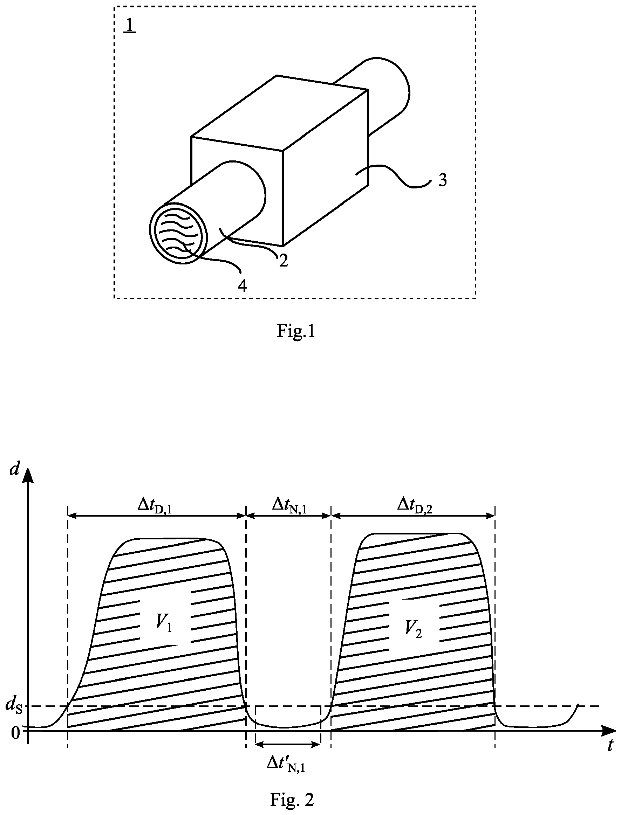

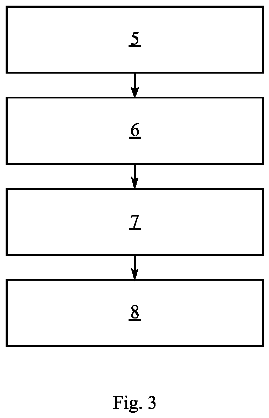

Das in Fig. 1 schematisch dargestellte Ausführungsbeispiel des erfindungsgemäßen Durchflussmessgeräts 1 ist ein magnetisch-induktives Durchflussmessgerät. Es weist ein Messrohr 2 und eine Steuerung 3 auf und ist in einen Abfüllprozess eines Mediums 4 integriert. Der Abfüllprozess besteht im Wesentlichen aus einem ersten und einem zweiten Abfüllschritt, die fortwährend wiederholt werden. Im ersten Abfüllschritt wird das Medium 4 gefördert, wodurch es auch durch das Messrohr 2 strömt. Im zweiten Abfüllschritt wird das Medium 4 nicht gefördert, wodurch es im Messrohr 2 stillsteht. Da das Durchflussmessgerät 1 in Betrieb ist, misst die Steuerung 3 den in Fig. 2 dargestellten Durchfluss *d* über der Zeit *t* und führt das im Ablaufplan in Fig. 3 dargestellte erfindungsgemäße Verfahren aus.

Das erfindungsgemäße Verfahren weist die folgenden Verfahrensschritte auf:
In einem ersten Verfahrensschritt 5 werden eine erste und eine zweite kontinuierliche Verweildauer des gemessenen Durchflusses *d* größer oder gleich einem Durchflussschwellenwert *d*_{S} einem ersten Durchflussintervall Δ*t*_{D,1} und einem zweiten Durchflussintervall Δ*t*_{D,2} zugeordnet. Das erste Durchflussintervall Δ*t*_{D,1} und das zweite Durchflussintervall Δ*t*_{D,1} korrespondieren mit jeweils einem ersten Abfüllschritt. Weiter wird durch Integration aus dem gemessenen Durchfluss *d* in dem gesamten ersten Durchflussintervall Δ*t*_{D,1} eine erste Durchflussmenge *V*₁ und aus dem Durchfluss *d* in dem gesamten zweiten Durchflussintervall Δ*t*_{D,2} eine zweite Durchflussmenge *V*₂ bestimmt.

Dann wird in einem zweiten Verfahrensschritt 6 die Abweichmenge der Durchflussmenge *V*₂ im zweiten Durchflussintervall Δ*t*_{D,2} durch Subtraktion von einer Referenzdurchflussmenge bestimmt und die Abweichmenge mit einer Grenzabweichmenge verglichen. Dabei wird die Referenzdurchflussmenge aus der ersten Durchflussmenge *V*₁ bestimmt, indem die erste Durchflussmenge *V*₁ der Referenzdurchflussmenge zugeordnet wird.

Dann wird in einem dritten Verfahrensschritt 7 eine kontinuierliche Verweildauer des gemessenen Durchflusses *d* kleiner dem Durchflussschwellenwert *d*_{S} einem Nulldurchflussintervall Δ*t*_{N,1} zugeordnet, da die Abweichmenge im zweiten Durchflussintervall Δ*t*_{D,2} kleiner als die Grenzabweichmenge ist. Das Nulldurchflussintervall Δ*t*_{N,1} korrespondiert mit einem zweiten Abfüllschritt. Obwohl das Medium 4 im Messrohr 2 stillsteht, ist der vom Durchflussmessgerät 1 gemessene Durchfluss *d* größer als Null. Mithin ist der Nulldurchfluss größer als Null, wodurch der gemessene Durchfluss *d* des strömenden Mediums 4 von einem konstanten Messfehler in Höhe des Nulldurchflusses überlagert ist.

Dann wird ein einem vierten Verfahrensschritt 8 der Nulldurchfluss durch das Messrohr 2 mit dem gemessenen Durchfluss *d* in dem dem zweiten Durchflussintervall Δ*t*_{D,2} unmittelbar vorangehenden ersten Nulldurchflussintervall Δ*t*_{N,1} bestimmt und kompensiert, da die Abweichmenge im zweiten Durchflussintervall Δ*t*_{D,2} kleiner als die Grenzabweichmenge ist. Die Kompensation des Nulldurchflusses erfolgt durch Subtraktion des Nulldurchflusses vom gemessenen Durchfluss *d,* wodurch der durch den Nulldurchfluss verursachte konstante Messfehler zumindest reduziert wird. Dabei wird der gemessene Durchfluss *d* in einem Teilintervall Δ*t'*_{N,1} des ersten Nulldurchflussintervalls Δ*t*_{N,1} verwendet. Die Dauer des Teilintervalls Δ*t'*_{N,1} in dem Nulldurchflussintervall Δ*t*_{N,1} ist derart bemessen, dass die asymptotischen Einschwingvorgänge des Durchflusses *d* innerhalb des Teilintervalls bereits ausreichend abgeklungen sind.

### Bezugszeichen:

- 1: Durchflussmessgerät
- 2: Messrohr
- 3: Steuerung
- 4: Medium
- 5: Erster Verfahrensschritt
- 6: Zweiter Verfahrensschritt
- 7: Dritter Verfahrensschritt
- 8: Vierter Verfahrensschritt

- *d*: Durchfluss
- *d*_{S}: Durchflussschwellenwert
- *t*: Zeit
- Δ*t*_{D,1}: Erstes Durchflussintervall
- Δ*t*_{D,2}: Zweites Durchflussintervall
- Δ*t*_{N,1}: Nulldurchflussintervall
- Δ*t'*_{N,1}: Teilintervall
- *V*₁: Erste Durchflussmenge
- *V*₂: Zweite Durchflussmenge

## Patentansprüche

1. Verfahren zum Betreiben eines Durchflussmessgeräts (1) mit einem Messrohr (2),
wobei der Durchfluss (*d*) eines Mediums (4) durch das Messrohr (2) gemessen wird,
**dadurch gekennzeichnet,**
**dass** jeweils eine kontinuierliche Verweildauer des gemessenen Durchflusses (*d*) größer oder gleich einem Durchflussschwellenwert (*d*_{S}) einem Durchflussintervall (Δ*t*_{D,1}, Δ*t*_{D,2}) zugeordnet wird und aus dem gemessenen Durchfluss (*d*) in dem Durchflussintervall (Δ*t*_{D,1}, Δ*t*_{D,2}) eine Durchflussmenge (*V*₁, *V*₂) bestimmt wird,
**dass** jeweils eine kontinuierliche Verweildauer des gemessenen Durchflusses (*d*) kleiner dem Durchflussschwellenwert (*d*_{S}) einem Nulldurchflussintervall (Δ*t*_{N,1}) zugeordnet wird,
**dass** jeweils die Abweichmenge der Durchflussmenge (*V*₁, *V*₂) in einem Durchflussintervall (Δ*t*_{D,1}, Δ*t*_{D,2}) von einer Referenzdurchflussmenge bestimmt wird und die Abweichmenge mit einer Grenzabweichmenge verglichen wird und dass, wenn die Abweichmenge in einem Durchflussintervall (Δ*t*_{D,1}, Δ*t*_{D,2}) kleiner als die Grenzabweichmenge ist, der Nulldurchfluss durch das Messrohr (2) mit dem gemessenen Durchfluss (*d*) in dem dem Durchflussintervall (Δ*t*_{D,1}, Δ*t*_{D,2}) unmittelbar vorangehenden Nulldurchflussintervall (Δ*t*_{N,1}) bestimmt und kompensiert wird.

2. Verfahren nach Anspruch 1, **dadurch gekennzeichnet, dass** die Referenzdurchflussmenge aus mindestens einer der Durchflussmengen (*V*₁, *V*₂) bestimmt wird.

3. Verfahren nach Anspruch 2, **dadurch gekennzeichnet, dass** die Referenzdurchflussmenge bestimmt wird, indem eine der Durchflussmengen (*V*₁*, V*₂) der Referenzdurchflussmenge zugeordnet wird.

4. Verfahren nach Anspruch 2, **dadurch gekennzeichnet, dass** die Referenzdurchflussmenge bestimmt wird, indem der Mittelwert aus mindestens zwei der Durchflussmengen (*V*₁, *V*₂) bestimmt und der Referenzdurchflussmenge zugeordnet wird.

5. Verfahren nach einem der Ansprüche 1 bis 4, **dadurch gekennzeichnet, dass** die Durchflussmenge (*V*₁, *V*₂) jeweils in einem Teilintervall eines Durchflussintervalls (Δ*t*_{D,1}, Δ*t*_{D,2}) bestimmt wird.

6. Verfahren nach einem der Ansprüche 1 bis 5, **dadurch gekennzeichnet, dass** der gemessene Durchfluss (*d*) jeweils in einem Teilintervall (Δ*t*_{N,1}) eines Nulldurchflussintervalls (Δ*t*_{N,1}) verwendet wird.

7. Verfahren nach einem der Ansprüche 1 bis 6, **dadurch gekennzeichnet, dass** jeweils, wenn die Abweichmenge in einem Durchflussintervall (Δ*t*_{D,1}, Δ*t*_{D,2}) kleiner als die Grenzabweichmenge ist, eine kontinuierliche Verweildauer des gemessenen Durchflusses (*d*) kleiner dem Durchflussschwellenwert (*d*_{S}) einem Nulldurchflussintervall (Δ*t*_{N,1}) zugeordnet wird, wobei das Nulldurchflussintervall (Δ*t*_{N,1}) dem Durchflussintervall (Δ*t*_{D,1}, Δ*t*_{D,2}) unmittelbar vorangeht.

8. Verfahren nach einem der Ansprüche 1 bis 7, **dadurch gekennzeichnet, dass** der Nulldurchfluss mit dem gemessenen Durchfluss (*d*) aus mindestens zwei Nulldurchflussintervallen (Δ*t*_{N,1}) bestimmt wird, indem aus dem gemessenen Durchfluss (*d*) in den mindestens zwei Nulldurchflussintervallen (Δ*t*_{N,1}) ein gleitender Mittelwert gebildet wird oder indem auf den gemessenen Durchfluss (*d*) in den mindestens zwei Nulldurchflussintervallen (Δ*t*_{N,1}) ein Medianfilter angewendet wird.

9. Durchflussmessgerät (1) mit einem Messrohr (2) und einer Steuerung (3),
wobei die Steuerung (3) im Betrieb den Durchfluss (*d*) eines Mediums (4) durch das Messrohr (2) misst,
**dadurch gekennzeichnet,**
**dass** die Steuerung (3) im Betrieb
einen Durchflussschwellenwert (*d*_{S}), eine Referenzdurchflussmenge und eine Grenzabweichmenge speichert,
jeweils einer kontinuierlichen Verweildauer des gemessenen Durchflusses (*d*) größer oder gleich dem Durchflussschwellenwert (*d*_{S}) ein Durchflussintervall (Δ*t*_{D,1}, Δ*t*_{D,2}) zuordnet und aus dem gemessenen Durchfluss (*d*) in dem Durchflussintervall (Δ*t*_{D,1}, Δ*t*_{D,2}) eine Durchflussmenge (*V*₁, *V*₂) bestimmt,
jeweils einer kontinuierlichen Verweildauer des gemessenen Durchflusses (*d*) kleiner dem Durchflussschwellenwert (*d*_{S}) ein Nulldurchflussintervall (Δ*t*_{N,1}) zuordnet,
jeweils die Abweichmenge der Durchflussmenge (*V*₁*, V*₂) in einem Durchflussintervall (Δ*t*_{D,1}, Δ*t*_{D,2}) von der Referenzdurchflussmenge bestimmt und die Abweichmenge mit der Grenzabweichmenge vergleicht
und, wenn die Abweichmenge in einem Durchflussintervall (Δ*t*_{D,1}, Δ*t*_{D,2}) kleiner als die Grenzabweichmenge ist, den Nulldurchfluss durch das Messrohr (2) mit dem gemessenen Durchfluss (*d*) in dem dem Durchflussintervall (Δ*t*_{D,1}, Δ*t*_{D,2}) unmittelbar vorangehenden Nulldurchflussintervall (Δ*t*_{N,1}) bestimmt und kompensiert.

10. Durchflussmessgerät (1) nach Anspruch 9, **dadurch gekennzeichnet, dass** die Steuerung (3) ein Verfahren nach einem der Ansprüche 2 bis 8 ausführt.

11. Durchflussmessgerät (1) nach Anspruch 9 oder 10, **dadurch gekennzeichnet, dass** das Durchflussmessgerät (1) ein magnetisch-induktives Durchflussmessgerät oder ein kernmagnetisches Durchflussmessgerät ist.

## Claims

1. Method for operating a flowmeter (1) having a measuring tube (2),
wherein the flow (*d*) of a medium (4) through the measuring tube (2) is measured,
**characterized in**
**that**, in each case, a continuous dwell time of the measured flow (*d*) greater than or equal to a flow threshold (*dₛ*) is assigned to a flow interval (*Δt_{D,1}*, *Δt_{D,2}*) and a flow volume (*V₁, V₂*) is determined from the measured flow (*d*) in the flow interval (*Δt_{D,1}, Δt_{D,2}*)*,*
**that**, in each case, a continuous dwell time of the measured flow (*d*) less than the flow threshold (*dₛ*) is assigned to a zero flow interval (*Δt_{N,1}*)*,*
**that**, in each case, a deviation volume of the flow volume (*V₁, V₂*) in one of the flow intervals (*Δt_{D,1}, Δt_{D,2}*) from a reference flow volume is deter-mined and the deviation volume is compared to a threshold deviation vol-ume, and
**that**, if the deviation volume in one of the flow intervals (*Δt_{D,1}, Δt_{D,2}*) is less than the threshold deviation volume, a zero flow through the measuring tube (2) is determined and compensated using the measured flow (*d*) in the zero flow interval (*Δt_{N,1}*) directly preceding the flow interval (*Δt_{D,1}, Δt_{D,2}*)*.*

2. Method according to claim 1, **characterized in that** the reference flow volume is determined from at least one of the flow volumes (*V₁, V₂*)*.*

3. Method according to claim 2, **characterized in that** the reference flow volume is determined **in that** one of the flow volumes (*V₁, V₂*) is as-signed to the reference flow volume.

4. Method according to claim 2, **characterized in that** the reference flow volume is determined **in that** an average value of at least two of the flow volumes (*V₁, V₂*) is determined and assigned to the reference flow volume.

5. Method according to any one of claims 1 to 4, **characterized in that** the flow volume (*V₁, V₂*), in each case, is determined in a sub-interval of a flow interval (*Δt_{D,1}, Δt_{D,2}*)*.*

6. Method according to any one of claims 1 to 5, **characterized in that** the measured flow *(d),* in each case, is used in a sub-interval (*Δt_{N,1}*) of a zero flow interval (*Δt_{N,1}*)*.*

7. Method according to any one of claims 1 to 6, **characterized in that**, in each case, if the deviation volume in one of the flow intervals (*Δt_{D,1}, Δt_{D,2}*) is less than the threshold deviation volume, a continuous dwell time of the measured volume (*d*) less than the flow threshold (*dₛ*) is assigned to a zero flow interval (*Δt_{N,1}*)*,* wherein the zero flow interval (*Δt_{N,1}*) directly precedes the flow interval (*Δt_{D,1}, Δt_{D,2}*)*.*

8. Method according to any one of claims 1 to 7, **characterized in that** the zero flow is determined using the measured flow *(d)* of at least two zero flow intervals (*Δt_{N,1}*)*,* **in that** a moving average is formed from the measured flow (*d*) in the at least two zero flow intervals (*Δt_{N,1}*) or **in that** a median filter is used on the measured flow (*d*) in the at least two zero flow intervals (*Δt_{N,1}*)*.*

9. Flowmeter (1) having a measuring tube (2) and a controller (3),
wherein the controller (3) measures the flow (d) of a medium (4) through the measuring tube (2) during operation,
**characterized in**
**that**, during operation, the controller (3)
stores a flow threshold (*dₛ*)*,* a reference flow volume and a threshold deviation volume,
assigns, in each case, a continuous dwell time of the measured flow (*d*) greater or equal to the flow threshold (*dₛ*) to a flow interval (*Δt_{D,1}, Δt_{D,2}*) and determines a flow volume (*V₁, V₂*) from the measured flow *(d)* in the flow interval (*Δt_{D,1}, Δt_{D,2}*)*,*
assigns, in each case, a continuous dwell time of the measured flow (*d*) less than the flow threshold (*dₛ*) to a zero flow interval (*Δt_{N,1}*)*,*
determines, in each case, a deviation volume of the flow volume (*V₁, V₂*) in one of the flow intervals (*Δt_{D,1}, Δt_{D,2}*) from the reference flow volume and compares the deviation volume to the threshold deviation volume, and,
if the deviation volume in one of the flow intervals (*Δt_{D,1}, Δt_{D,2}*) is less than the threshold deviation volume, determines and compensates the zero flow through the measuring tube (2) using the measured flow (*d*) in the zero flow interval (*Δt_{N,1}*) directly preceding the flow interval (*Δt_{D,1}, Δt_{D,2}*)*.*

10. Flowmeter (1) according to claim 9, **characterized in that** the controller (3) carries out a method according to any one of claims 2 to 8.

11. Flowmeter (1) according to claim 9 or 10, **characterized in that** the flowmeter (1) is a magnetic-inductive flowmeter or a nuclear magnetic flowmeter.

## Revendications

1. Procédé pour faire fonctionner un débitmètre (1) comprenant un tube de mesure (2),
le débit (d) d'un fluide (4) à travers le tube de mesure (2) étant mesuré,
**caractérisé en ce**
**qu'**une durée de séjour continue du débit mesuré (d) égale ou supérieure à une valeur de seuil de débit (dₛ) est respectivement associée à un intervalle de débit (Δt_{D,1}, Δt_{D,2}) et un débit volumique (V₁, V₂) est déterminé à partir du débit mesuré (d) dans l'intervalle de débit (Δt_{D,1}, Δt_{D,2}),
en ce qu'une durée de séjour continue du débit mesuré (d) inférieure à la valeur de seuil de débit (dₛ) est respectivement associée à un intervalle de débit nul (Δt_{N,1}),
en ce que l'écart de volume entre le débit volumique (V₁, V₂) dans un intervalle de débit (Δt_{D,1}, Δt_{D,2}) et un débit volumique de référence est déterminé et l'écart de volume est comparé à un écart de volume limite,
et en ce que lorsque l'écart de volume dans un intervalle de débit (Δt_{D,1}, Δt_{D,2}) est inférieur à l'écart de volume limite, le débit nul à travers le tube de mesure (2) est déterminé et compensé avec le débit mesuré (d) dans l'intervalle de débit nul (Δt_{N,1}) qui précède immédiatement l'intervalle de débit (Δt_{D,1}, Δt_{D,2}).

2. Procédé selon la revendication 1, **caractérisé en ce que** le débit volumique de référence est déterminé à partir d'au moins l'un des débits volumiques (V₁, V₂).

3. Procédé selon la revendication 2, **caractérisé en ce que** le débit volumique de référence est déterminé en associant l'un des débits volumiques (V₁, V₂) au débit volumique de référence.

4. Procédé selon la revendication 2, **caractérisé en ce que** le débit volumique de référence est déterminé en déterminant la valeur moyenne à partir d'au moins deux des débits volumiques (V₁, V₂) et en l'associant au débit volumique de référence.

5. Procédé selon l'une des revendications 1 à 4, **caractérisé en ce que** le débit volumique (V₁, V₂) est respectivement déterminé dans un intervalle partiel d'un intervalle de débit (Δt_{D,1}, Δt_{D,2}).

6. Procédé selon l'une des revendications 1 à 5, **caractérisé en ce que** le débit mesuré (d) est respectivement utilisé dans un intervalle partiel (Δt'_{N,1}) d'un intervalle de débit nul (Δt_{N,1}).

7. Procédé selon l'une des revendications 1 à 6, **caractérisé en ce que** lorsque l'écart de volume dans un intervalle de débit (Δt_{D,1}, Δt_{D,2}) est inférieur à l'écart de volume limite, une durée de séjour continue du débit mesuré (d) inférieure à la valeur de seuil de débit (dₛ) est associée à chaque fois à un intervalle de débit nul (Δt_{N,1}), l'intervalle de débit nul (Δt_{N,1}) précédant immédiatement l'intervalle de débit (Δt_{D,1}, Δt_{D,2}).

8. Procédé selon l'une des revendications 1 à 7, **caractérisé en ce que** le débit nul est déterminé avec le débit mesuré (d) issu d'au moins deux intervalles de débit nul (Δt_{N,1}) en formant une valeur moyenne glissante à partir du débit mesuré (d) dans les au moins deux intervalles de débit nul (Δt_{N,1}) ou en appliquant un filtre médian au débit mesuré (d) dans les au moins deux intervalles de débit nul (Δt_{N,1}).

9. Débitmètre (1) comprenant un tube de mesure (2) et une commande (3),
la commande (3), en service, mesurant le débit (d) d'un fluide (4) à travers le tube de mesure (2),
**caractérisé en ce que**
la commande (3), en service,
mémorise une valeur de seuil de débit (dₛ), un débit volumique de référence et un écart de volume limite associe respectivement une durée de séjour continue du débit mesuré (d) égale ou supérieure à la valeur de seuil de débit (dₛ) à un intervalle de débit (Δt_{D,1}, Δt_{D,2}) et détermine un débit volumique (V₁, V₂) à partir du débit mesuré (d) dans l'intervalle de débit (Δt_{D,1}, Δt_{D,2}),
associe respectivement à un intervalle de débit nul (Δt_{N,1}) une durée de séjour continue du débit mesuré (d) inférieure à la valeur de seuil de débit (dₛ), détermine respectivement l'écart de volume entre le débit volumique (V₁, V₂) dans un intervalle de débit (Δt_{D,1}, Δt_{D,2}) et le débit volumique de référence et compare l'écart de volume à l'écart de volume limite,
et lorsque l'écart de volume dans un intervalle de débit (Δt_{D,1}, Δt_{D,2}) est inférieur à l'écart de volume limite, détermine et compense le débit nul à travers le tube de mesure (2) avec le débit mesuré (d) dans l'intervalle de débit nul (Δt_{N,1}) qui précède immédiatement l'intervalle de débit (Δt_{D,1}, Δt_{D,2}) .

10. Débitmètre (1) selon la revendication 9, **caractérisé en ce que** la commande (3) met en oeuvre un procédé selon l'une des revendications 2 à 8.

11. Débitmètre (1) selon la revendication 9 ou 10, **caractérisé en ce que** le débitmètre (1) est un débitmètre à induction magnétique ou un débitmètre magnétique nucléaire.
